# EUROPEAN PATENT APPLICATION

(11) **EP 0 990 522 A2**
(43) Date of publication of application: **05.04.2000**
(21) Application number: 99118855.8
(22) Date of filing: 24.09.1999
(51) Int. Cl.: B41J 2/01

(54) **Process,device and system for printing on three-dimensional objects**

(30) Priority: 30.09.1998 IT TO980819
(71) Applicant: Germena, Stefano, 10125 Torino (IT)
(72) Inventor: Germena, Stefano, 10125 Torino (IT)
(74) Representative: Aprà, Mario

(57) **Abstract**

The printing process according to the invention consists in:
- inputting into a computer the data, in digital form, relating to the surface of a three-dimensional object;
- inputting into said computer the data, in digital form, relating to a graphic representation;
- carrying out on said computer the virtual overlaying of said digital graphic representation on the digital reproduction of the solid surface of the three-dimensional object;
- checking by means of said computer the operational sequence of a production machine and of a printing device in order to reproduce by printing on the solid surface of said three-dimensional object said graphic representation.

The device for carrying out the process comprises a computer (12) suitably programmed for:
(a) inputting the data, in digital form, relating to the solid surface of a three-dimensional object on which to print;
(b) inputting the data, in digital form, relating to a graphic representation;
(c) carrying out the virtual overlaying of said digital graphic representation on the digital reproduction of the solid surface of the three-dimensional object, and
(d) checking the operational and functional sequence of a production machine (11) and of a printing device (13), in order to reproduce by printing on the solid surface of said three-dimensional object said graphic representation.

## Description

The present invention concerns a process for printing on three-dimensional objects. The invention also concerns a device and a system for implementing the process.

The principal object of the present invention is to provide a process which makes it possible to print wording, decorative motifs and/or drawings, preferably in four colours, on the surfaces of solid objects, without the printing errors or imperfections caused by the curvature of the surfaces themselves and, if required, repeatedly, in order to allow printing on a mass-productive scale.

Another object is to provide a device, with a simplified structure and reliable operational characteristics which will make it possible to carry out the above mentioned process efficiently.

In view of these objects, the present invention provides a process for printing on three-dimensional objects whose basic characteristic is described in Claim 1.

The principal characteristic of the device for implementing the abovementioned process is described in Claim 6.

Further advantageous characteristics are described in the dependent claims.

The abovementioned claims are understood to form an integral part of this description.

The process for printing on three-dimensional objects essentially comprises the following operational phases which consist of:
- inputting into a suitably programmed computer the data, in digital form, fbr example in the form of a "cloud of points", relating to the whole or part of the solid surface of a three-dimensional object on which to print, in order to acquire and store the mathematics and the digital reproduction of said solid surface;
- inputting in said suitably programmed computer the data, in digital form, relating to a graphic representation (for example wording and/or drawing) to be printed on the surface of said three-dimensional object, in order to acquire and store the mathematics of said representation and the digital reproduction of the same;
- carrying out on said computer, by means of a suitable software program based on said mathematics, the virtual overlaying of said digital graphic representation to be printed on the digital reproduction of the solid surface of the three-dimensional object to be printed on, supplying if required a three-dimensional graphic reproduction on a monitor functionally linked to said computer;
- checking by means of said suitably programmed computer, on the basis of the program instructions thus acquired, the operational and functional sequence of a suitably programmed production machine, such as for example a robot with an articulated arm, and of a printing device, such as a four colour printer for a computer - said printing device being fitted on said production machine and said object being held in a fixed position, or said printing device being held in a fixed position and said three-dimensional object being supported by said production machine - in order to reproduce by printing on the surface or relevant part of the solid surface of said three-dimensional object said graphic representation (for example wording and/or drawing), while said computer simultaneously controls the feed of ink, pigments or the like to said printing device and its application, such that it carries out the printing along an axis orthogonal to each relevant point of said solid surface, until said graphic representation on said three-dimensional object is complete.

Once the mathematics of the solid surface of the three-dimensional object and of the graphic representation to be printed on said surface have been input, said operation for controlling the functions of said production machine and of said printing device by means of the computer may be repeated sequentially many times, in order to carry out repeated work cycles for mass production.

The input into said computer of the mathematics of the solid surface of the three-dimensional object can be effected using surface sensor devices such as tracer points or feeler pins mechanically connected to said articulated arm and functionally and operationally linked to said computer, which is suitably programmed to receive, process and store in a digital form the co-ordinates of the points of said surface as read by the tracer points which are, for example, controlled by an operator via an electronic self-learning console suitable for controlling movements in space.

The input into said computer of the mathematics of the graphic representation to be printed on the solid surface of said three-dimensional object may be carried out by electronic image scanning means which are functionally and operationally linked to said computer, which is suitably programmed to receive, process and store said data.

The invention will be described more fully in the detailed description which follows with reference to the appended diagrams, supplied solely as examples, in which:

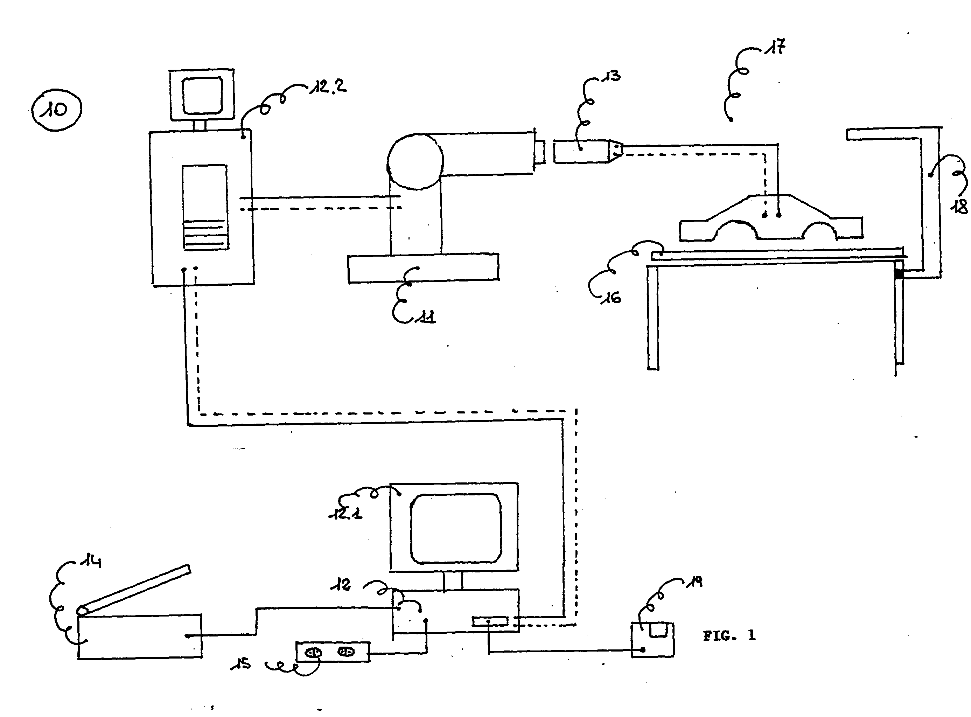

- Fig. 1 shows a schematic plan of a system incorporating the device for implementing the process for printing on three-dimensional objects according to the invention;
- Fig. 2 is a similar view to Fig. 1, but illustrates a variant embodiment of said system.

The number 10 on the drawing denotes, overall, an automated system for the decoration of small scale models of automobiles and similar items.

Said system comprises a programmable robot with an articulated arm 11, such as, for example, a robot used in industry for painting motor vehicles and similar items (type LRM 100i), functionally and operationally connected to a computer 12 with monitor 12.1. The number 12.2 denotes an electric panel with control units, which functionally and operationally connects the computer 12 to the robot 11.

On the free extremity of its arm, said robot 11 supports a four colour plotter printing unit 13 which is also functionally and operationally linked to said computer 12. Said printing unit 13 comprises, for example, a writing head from a conventional colour printer and is fixed to the free extremity of said articulated arm, with the flexible tubes for feeding printing ink and the electrical cables for power supply and control of its management card.

Moreover, a scanner 14 is also functionally and operationally linked to said computer 12, for processing a drawing or photo, in digital form, and its acquisition as an image on the monitor 12.1 of the computer itself, in which the mathematical information relating to such a drawing or photo is input, processed and stored in digital form.

A suitable interface creates said functional and operational link between the robot, the plotter card, the computer and the scanner.

Said robot 11 is equipped with tracer points, which are known per se and not illustrated, also carried at the extremity of its articulated arm, with means of signalling (optical fibres) for bringing closer and tracing, in digital form, for example in the form of "cloud of points", the whole or part of the solid surface of a three-dimensional object (for example a scale model of a car), held in a fixed position. Said tracer points are integrated in the print head unit 13. Using an electronic self-learning control panel 15, an operator traces the surface of the object point by point using the tracer points. Interpolation operations are carried out by the suitably programmed computer.

Said computer 12 is also suitably programmed to receive, process and store in digital form the data arriving from said scanner, tracer points and self-learning control panel, and to operationally and functionally control said robot and said printing unit. The software used for the machine-operator dialogue is of the user-frame type (setting of co-ordinates) to be used with the data transfer (transfer of data to RS232).

Said computer 12 carries out, using a suitable software program based on said mathematics, the virtual overlaying of said digital graphic representation to be printed on the digital reproduction of the solid surface of the three-dimensional object which is to be printed, supplying if required a graphic three-dimensional reproduction on the monitor 12.1 functionally linked to said computer.

Thereafter, reproducing in inverse sequence the operations carried out during the self-learning process for the shape of the solid surface of said three-dimensional object, if necessary integrated with data interpolation operations, the suitably programmed computer 12 controls, on the basis of the program instructions so acquired, the operational and functional sequence of the operations of said suitably programmed robot 11 with the articulated arm and of said four colour print head 13, provided on said arm, in order to reproduce in print on the surface or relevant part of the solid surface of said three-dimensional object said graphic representation (for example wording and/or drawing), while said computer simultaneously controls the feed of the ink or similar product to said print head and its application, such that it carries out the printing along an axis orthogonal to each relevant point on said solid surface, until said graphic representation on said three-dimensional object is complete.

This operational sequence can be repeated many times, thus carrying out repeated work cycles for mass production.

To this end a continuous conveyor belt feed system 16 is included in the plant 10, on which conveyor the automobile models are conveyed in succession, first to a decoration station 17, where the device according to the invention operates as described above, and then to a subsequent station 18 for drying the printing ink applied to their solid surface, in which the models are temporarily placed in a suitable kiln.

It should be noted that the data relating to the mathematics of the solid surface of the three-dimensional object to be decorated and of the graphic representation (for example wording or drawing) to be printed on said surface can be input into said computer directly by the operator, using a keyboard or a mass memory 19 in which these data have been input beforehand.

Naturally, numerous variations can be made in practice to the device described and illustrated solely by way of non-limiting example.

Therefore, for example, the production machine may have a portal structure equipped with a head that may be orientated along a plurality of axes. Moreover, the printing devices can be fed with any kind of ink, paint or pigment suitable for producing wording, drawings or similar elements on the surfaces of any object.

Different devices may be used as the printing means, such as for example dot matrix or ink-jet writing heads, airbrushes or similar devices.

For tracing the surface of the three-dimensional object to be decorated, apart from the tracer points, it is possible to use reading means of optical type, for example a laser.

Furthermore, rather than holding the three-dimensional object in a fixed position, while the printing device is oriented with respect to it, it is possible to operate inversely, holding the printing device in a stationary position and orienting the three-dimensional object with respect to it, or even reciprocally orienting the printing device and the three-dimensional object.

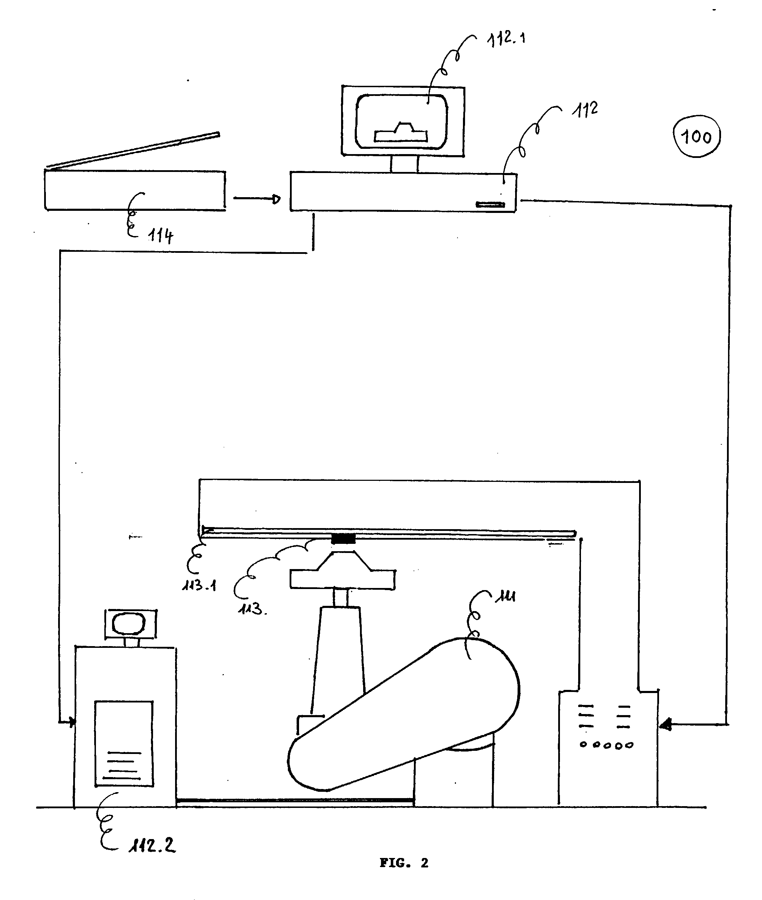

In Fig. 2 the number 100 denotes an automated system for the decoration of scale models of automobiles and similar items, in which a stationary station is equipped with a printing unit 113 with a mobile four colour print head that moves along straight guides 113.1. A programmed robot with articulated arm 111 orients a three-dimensional object to be decorated with respect to the print head 113. Said robot 111 and said printing unit 113 are functionally and operationally linked to a computer 112 with monitor 112.1. An electric control panel 112.2 functionally and operationally links said computer 112 to the robot 111 and the printing units 113. The number 114 denotes a scanner functionally and operationally linked to said computer 112.

The process described in the appended claims is carried out in the system 100, according to the method whereby the printing device remains stationary and the three-dimensional object to be decorated is oriented with respect to it.

## Claims

1. Process for printing on three-dimensional objects, characterized by the fact that it comprises the following operational phases consisting of:
- inputting into a suitably programmed computer the data, in digital form, for example in the form of a "cloud of points", relating to the whole or part of the solid surface of a three-dimensional object on which to print, in order to acquire and store the mathematics and the digital reproduction of said solid surface;
- inputing into said suitably programmed computer the data, relating to in digital form, of a graphic representation (for example wording and/or drawing) to be printed on the surface of said three-dimensional object, in order to acquire and store the mathematics of said representation and the digital reproduction of the same;
- carrying out on said computer, by means of a suitable software program based on said mathematics, the virtual overlaying of said digital graphic representation to be printed on the digital reproduction of the solid surface of the three-dimensional object to be printed on, supplying if required a three-dimensional graphic reproduction on a monitor functionally linked to said computer;
- checking by means of said suitably programmed computer, on the basis of the program instructions thus acquired, the operational and functional sequence of a suitably programmed production machine, such as for example a robot with an articulated arm, and of a printing device, such as a four colour printer for a computer - said printing device being fitted on said production machine and said object being held in a fixed position, or said printing device being held in a fixed position and said three-dimensional object being supported by said production machine - in order to reproduce by printing on the surface or relevant part of the solid surface of said three-dimensional object said graphic representation (for example wording and/or drawing) while said computer simultaneously controls the feed of ink, pigments or the like to said printing device and its application, such that it carries out the printing along an axis orthogonal to each relevant point of said solid surface, until said graphic representation on said three-dimensional object is complete.

2. Process according to Claim 1, characterized in that, once the mathematics of the solid surface of the three-dimensional object on which to print and of the graphic representation to be printed on said surface have been input, said operation for controlling the functions of said production machine and of said printing device by means of the computer may be repeated sequentially many times, in order to carry out repeated work cycles for mass production.

3. Process according to Claim 1, characterized in that the input into said computer of the mathematics of the solid surface of the three-dimensional object is effected using surface sensor devices such as tracer points or feeler pins functionally and operationally linked to said computer, which is suitably programmed to receive, process and store in digital form the co-ordinates of the points of said surface as read by the tracer points which are, for example, controlled by an operator via an electronic self-learning console suitable for controlling movements in space.

4. Process according to Claim 1, characterized in that the input into said computer of the mathematics of the graphic representation to be printed on the solid surface of said three-dimensional object is carried out by electronic image scanning means which are functionally and operationally linked to said computer, which is suitably programmed to receive, process and store said data.

5. Process according to Claim 1, characterized that the data relating to the mathematics of the solid surface of the three-dimensional object to be decorated and of the graphic representation (for example wording or drawing) to be printed on said surface is input into said computer directly by the operator using a keyboard or a mass memory in which these data have been input beforehand.

6. Device for carrying out the printing process on three-dimensional objects according to one or more of the previous claims, characterized in that it comprises a computer (12, 112) suitably programmed for:
(a) inputting the data, in digital form, for example in the form of a "cloud of points", relating to the whole or part of the solid surface of a three-dimensional object on which to print, in order to acquire and store the mathematics and the digital reproduction of said solid surface;
(b) inputting the data, in digital form relating a graphic representation (for example wording and/or drawing) to be printed on the surface of said three-dimensional object, in order to acquire and store the mathematics of said representation and the digital reproduction of the same;
(c) carrying out, by means of a suitable software program based on said mathematics, the virtual overlaying of said digital graphic representation to be printed on the digital reproduction of said solid surface of the three-dimensional object to be printed on, supplying if required a three-dimensional graphic reproduction on a monitor (12.1, 112.1) functionally linked to said computer, and
(d) checking, on the basis of the program instructions thus acquired, the operational and functional sequence of a suitably programmed production machine (11, 111), such as for example a robot with an articulated arm, and of a printing device (13, 113), such as a four colour printer for a computer - said printing device (13, 113) being fitted on said production machine (11, 111) and said object being held in a fixed position, or said printing device being held in a fixed position and said three-dimensional object being supported by said production machine - in order to reproduce by printing on the surface or relevant part of the solid surface of said three-dimensional object said graphic representation (for example, wording and/or drawing), while said computer simultaneously controls the feed of ink, pigments or the like to said printing device and its application, such that it carries out the printing along an axis orthogonal to each relevant point of said solid surface, until said graphic representation on said three-dimensional object is complete.

7. Device according to Claim 6, characterized in that it comprises, in order to effect the input into said computer (12) of the mathematics of the solid surface of the three-dimensional object, surface sensor devices, such as tracer points or feeler pins mechanically connected to said production machine (11) and functionally and operationally linked to said computer (12), which is suitably programmed to receive, process and store in digital form the co-ordinates of the points of said surface as read by the tracer points which are, for example, controlled by an operator via an electronic self-learning console (15) suitable for controlling movements in space.

8. Device according to Claim 6, characterized in that it comprises, in order to effect the input into said computer (12) of the mathematics of the graphic representation to be printed on the solid surface of said three-dimensional object, electronic image scanning means (14) which are functionally and operationally linked to said computer, which is suitably programmed to receive, process and store said data.

9. System for the mass-production decoration of models, for example scale models of automobiles or similar items, characterized in that it comprises the device according to one or more of Claims 6 to 8.

10. System according to Claim 9, characterized that it comprises a feed system, for example a continuous conveyor belt (16), on which the models are conveyed in succession, first to a decoration station (17) where the device according to one or more of Claims 6 to 9 operates, and then to a subsequent station (18) for drying the printing ink and/or pigments applied to their solid surface, in which station the models are temporarily placed in a suitable kiln.

11. System according to Claim 9, characterized in that a production machine (11) carries out the following operations in sequence on a plurality of scale models of automobiles or similar items to be decorated on a mass-production scale; picking the model up prior to decoration, handling it during decoration and discharging it after decoration.
